# FASCICULE DE BREVET EUROPEEN

(11) **EP 2 364 579 B1**
(45) Date de publication et mention de la délivrance du brevet: **28.08.2013**
(21) Numéro de dépôt: 09764260.7
(22) Date de dépôt: 04.12.2009
(51) Int. Cl.: H05G 2/00, G02F 1/35, H01S 4/00, G01B 9/02, G01B 11/26, G01N 21/62, G03H 1/00

(54) **DISPOSITIF DE GENERATION DE SOURCE SECONDAIRE PAR INTERACTION LASER-MATIERE COMPRENANT UN DISPOSITIF OPTIQUE DE CONTRÔLE DE LA POSITION ET DE L'ORIENTATION D'UNE SURFACE EN MOUVEMENT**
EINRICHTUNG ZUR ERZEUGUNG EINER SEKUNDÄREN QUELLE DURCH LASER-MASSE-INTERAKTION MIT EINER OPTISCHEN ANORDNUNG ZUM ÜBERWACHEN DER POSITION UND AUSRICHTUNG EINER BEWEGLICHEN OBERFLÄCHE
DEVICE FOR GENERATING A SECONDARY SOURCE BY LASER-MATTER INTERACTION, INCLUDING AN OPTICAL DEVICE FOR MONITORING THE POSITION AND THE ORIENTATION OF A MOVING SURFACE

(30) Priorité: 04.12.2008 FR 0858270
(43) Date de publication de la demande: 14.09.2011
(73) Titulaire: Ecole Polytechnique, 91128 Palaiseau Cedex (FR); Ecole Nationale Supérieure de Techniques Avancées, 75015 Paris (FR); Centre National de la Recherche Scientifique, 75016 Paris (FR)
(72) Inventeur: BOROT, Antonin, 94230 Cachan (FR); LOPEZ-MARTENS, Rodrigo, 75014 Paris (FR); GEINDRE, Jean-Paul, 95210 Saint Gratien (FR); DOUILLET, Denis, 91120 Palaiseau (FR)
(74) Mandataire: Esselin, Sophie
(86) Numéro de dépôt international: PCT/EP2009/066397
(87) Numéro de publication internationale: WO 2010/063820

(56) Documents cités:
- JP-A- 2007 103 176
- US-A1- 2004 195 529
- US-A1- 2008 157 011
- K. NISHIHARA: "The punch-out target" EUVL05 SOURCE WORKSHOP, [Online] 10 novembre 2005 (2005-11-10), XP002569228 San Diego ISSN: 0 Extrait de l'Internet: URL:www.sematech.org/meetings/archives/lit ho/7739/index.htm> [extrait le 2010-02-18]
- OH ET AL: "Measuring and compensating for 5-DOF parasitic motion errors in translation stages using Twyman-Green interferometry" INTERNATIONAL JOURNAL OF MACHINE TOOL DESIGN AND RESEARCH, PERGAMON PRESS, OXFORD, GB, vol. 46, no. 14, 1 novembre 2006 (2006-11-01), pages 1748-1752, XP005595046 ISSN: 0020-7357
- SAGISAKA A ET AL: "Simultaneous Generation of UV Harmonics and Protons From a Thin-Foil Target With a High-Intensity Laser" IEEE TRANSACTIONS ON PLASMA SCIENCE, IEEE SERVICE CENTER, PISCATAWAY, NJ, US, vol. 36, no. 4, 1 août 2008 (2008-08-01), pages 1812-1816, XP011232792 ISSN: 0093-3813

## Description

Le domaine de l'invention est celui des dispositifs de contrôle de l'orientation et de la position d'une surface en mouvement et notamment d'une surface destinée à servir de cible pour un faisceau laser primaire afin de générer un faisceau secondaire (X-UV, électrons, protons,...) par interaction avec ladite cible.

Ce type de dispositif trouve notamment des applications dans le domaine de la génération d'harmoniques d'ordre élevé par interaction laser-matière sur cible solide, correspondant à la génération d'un champ électromagnétique de longueur d'onde extrêmement courte, de l'ordre de quelques dizaines de nanomètres, ces harmoniques pouvant être mises en phase afin de générer des impulsions de durée attoseconde (en pratique de l'ordre de quelques 10⁻¹⁷ ou 10⁻¹⁶ seconde), de telles sources de rayonnement étant par exemple recherchées dans l'analyse de phénomènes ultra-rapides à l'échelle sub-atomique.

Actuellement il existe des sources harmoniques issues de l'interaction de laser femtoseconde sur cible solide, cependant ces dernières sont réalisées à basse voire très basse cadence de répétition (< 10 Hz). Le phénomène d'interaction laser-matière génère en effet l'émission d'un faisceau secondaire pouvant typiquement être un faisceau harmonique, c'est-à dire un faisceau lumineux de longueur d'onde plus courte que celle de la source primaire.

Le problème rencontré dans ce type d'interactions de laser ultra-intense sur cible solide lorsque l'on cherche à fonctionner à très haute cadence est de pouvoir régénérer la surface d'interaction entre chaque tir, car chaque interaction entraîne la destruction de la surface d'interaction, et il est nécessaire que l'impulsion lumineuse de la source primaire interagisse avec une zone vierge de la cible.

Il est donc nécessaire de prévoir des moyens permettant de déplacer la cible entre chaque tir, de telle sorte que la surface présentée à l'impulsion laser suivante soit intacte. Sachant que le point focal du laser est fixe dans l'espace, une solution consiste à utiliser une cible en forme de disque à laquelle on imprime un mouvement de rotation, afin que les impacts du laser sur la cible forment un cercle. Une fois ce cercle achevé, on translate la cible parallèlement à la surface de la cible, puis on recommence le mouvement de rotation afin d'obtenir un cercle concentrique au premier, et ainsi de suite. Ce procédé permet l'obtention d'une source secondaire dont le taux de répétition est égal à celui de la source primaire.

Néanmoins et ce de manière inhérente au procédé employé, la mise en mouvement de la cible crée des instabilités au niveau de l'émission de la source secondaire, tant en termes de position de ladite source secondaire (ce qui entraine aussi une instabilité dans l'efficacité du processus de génération) qu'en terme d'orientation de ladite source, alors qu'il est nécessaire de pouvoir disposer d'une source secondaire de haute précision en terme de position et d'orientation de faisceau.

Il est notamment connu du brevet US 20041195529 un dispositif de génération de source secondaire isssue d'une source optique primaire émettant un faisceau optique à une première longueur d'onde sur une surface en mouvement avec laquelle le premier faisceau interagit de manière à générer un faisceau secondaire. Ce dispositif comporte en outre un dispositif optique de contrôle de manière à déterminer la position du point d'émission de la source secondaire sur ladite surface, ce dispositif de contrôle comportant un faisceau de contrôle, une caméra et des moyens pour générer une boucle de rétroaction.

Par rapport à un tel dispositif, le dispositif de la présente invention permet de contrôler la position ainsi que l'orientation d'une surface en mouvement utilisée pour générer une radiation secondaire par interaction matière-lumière dans le cas où la surface en mouvement est plane. Le brevet US 2004/195529 concernant quant à lui que la compensation de l'erreur de position du lieu d'émission de la radiation secondaire dans le cas de l'intéraction d'un laser avec un jet de matière liquide ou solide.

Il est par ailleurs connu, notamment dans le brevet US 2008/157011 ou le brevet JP 2007 103176 ou bien encore dans la publication K.NISHIHARA décrivent des configurations dans lesquelles un laser interagit avec une cible plane solide ou liquide mais ne suggèrent pas de solution de contrôle de l'orientation et de la position d'interaction laser-matière lorsqu'une surface plane en rotation est utilisée comme cible pour émettre une radiation.

Dans ce contexte et plus précisément la présente invention a pour objet un dispositif de génération de source secondaire issue d'une source optique primaire (F1) émettant un premier faisceau optique à une première longueur d'onde (λ₁) focalisée sur une surface en mouvement (10), avec laquelle ledit premier faisceau interagit de manière à générer un faisceau secondaire (F2) comportant :
- un dispositif optique de contrôle de la position de ladite surface en mouvement générant un faisceau de contrôle de manière à déterminer l'orientation et la position du point d'émission de ladite source secondaire sur ladite surface, ledit dispositif optique de contrôle de la position d'une surface en mouvement (10) comprenant :
   - un faisceau laser de contrôle (11), réfléchi par ladite surface en mouvement ;
   - des moyens (16) de type caméra pour imager des informations de position de ladite surface ;
   - des moyens (18) pour générer une boucle de rétroaction de contrôle de l'orientation et de la position de ladite surface en mouvement à partir de l'analyse dudit signal porteur d'informations,
caractérisé en ce que :
- ledit faisceau de contrôle est séparé en deux bras, dont l'un est un faisceau référence, fixe, et l'autre est un faisceau d'analyse (12) réfléchi par la surface en mouvement et mobile ;
et en ce que ledit dispositif comprend :
- des moyens pour faire interférer lesdits faisceaux référence et d'analyse de manière à générer des franges d'interférences ;
- des moyens d'analyse (17) desdites images d'interférences ;
- des moyens (18) pour générer une boucle de rétroaction permettant le contrôle de l'orientation et de la position de ladite surface en mouvement.

Selon une variante de l'invention, les moyens d'analyse desdites images d'interférences comportent des moyens d'analyse temporelle des paramètres suivants :
- la variation du pas du réseau de franges correspondant au nombre de franges d'interférences imagées sur la caméra ;
- le décalage du réseau de franges en terme de position du réseau de franges d'interférences par rapport au bord de la caméra ;
- l'inclinaison des franges d'interférences correspondant à l'angle des franges par rapport à l'axe vertical de la caméra défini dans un plan sensiblement parallèle à celui de la surface en mouvement.

Selon une variante de l'invention, les moyens pour générer une boucle de rétroaction comprennent un ensemble d'actuateurs motorisés couplés à ladite surface en mouvement et disposés en « trait-point-plan », dans un plan sensiblement parallèle à celui de la surface en mouvement pour régler l'orientation et la position de ladite surface.

Selon une variante de l'invention, le dispositif comporte un laser Hélium-Néon générant le faisceau laser de contrôle stabilisé en fréquence.

Selon une variante de l'invention, la surface en mouvement est un disque de verre ou de métal ou de plastique.

Selon une variante de l'invention, les moyens pour faire interférer lesdits faisceaux de référence et d'analyse de manière à générer un faisceau d'interférences comportent deux séparateurs de faisceaux et un miroir de renvoi.

Selon une variante de l'invention, le dispositif comporte en outre des moyens pour élargir le diamètre dudit faisceau laser placés en amont de la séparation du faisceau d'analyse, de manière à couvrir la surface de détection de la caméra.

Selon une variante de l'invention, les moyens d'analyse comportent des moyens de traitement d'image pour extraire les informations de variation de position et d'orientation de ladite surface par rapport à un plan de référence.

Selon une variante de l'invention, le faisceau de la source secondaire est de type X-UV, électrons, protons.

Selon une variante de l'invention, la surface en mouvement est montée sur un porte-cible, ledit porte-cible étant équipé de moyens de mise en rotation de ladite surface et de moyens de translation de ladite surface.

Selon une variante de l'invention, le porte-cible et la surface en mouvement sont montés dans une enceinte à vide.

Selon une variante de l'invention, le faisceau laser de contrôle est généré par une source laser continue ayant une longueur d'onde inférieure ou égale à la longueur d'onde de la source optique primaire pour assurer une grande précision de mesure.

Selon une variante de l'invention, la source optique primaire est une source laser impulsionnelle femtoseconde.

Selon une variante de l'invention, la source secondaire est un faisceau laser harmonique de la source primaire d'une durée de quelques dizaines à quelques centaines d'attosecondes.

L'invention sera mieux comprise et d'autres avantages apparaîtront à la lecture de la description qui va suivre donnée à titre non limitatif et grâce aux figures annexées parmi lesquelles :
- les figures 1 schématise le dispositif de contrôle de l'orientation et de la position d'une surface en mouvement utilisé dans un dispositif selon l'invention ;
- les figures 2a, 2b, 2c et 2d illustrent les différentes positions pouvant être prises par la surface en mouvement et leur répercussions sur les franges d'interférences ;
- les figures 3a, 3b et 3c illustrent différentes vues d'un exemple de porte-cible sur lequel est montée la cible destinée à générer une source secondaire par interaction d'une source optique primaire et de la matière;
- les figures 4a et 4b illustrent respectivement des franges d'interférences visibles sur la caméra et des informations de position (en micromètres) recueillies au niveau de ladite caméra depuis ces franges dans le dispositif de l'invention;
- la figure 5 illustre un exemple de dispositif de source secondaire comportant un dispositif de contrôle selon l'invention, la source secondaire représentée étant le faisceau harmonique générée par l'interaction.

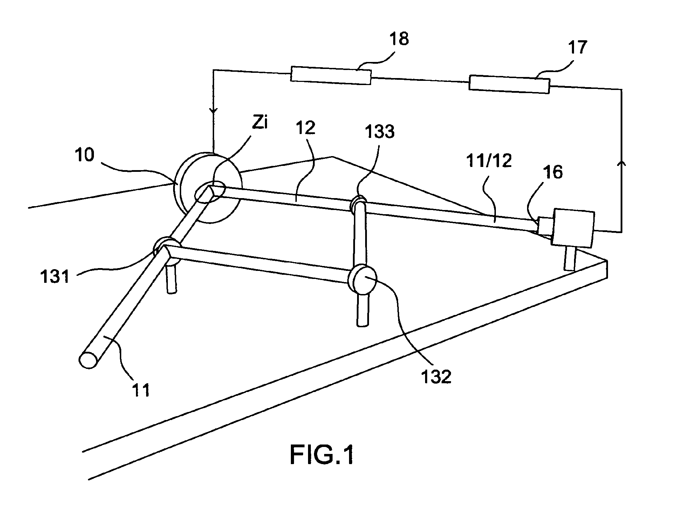

Le dispositif de contrôle proposé d'être utilisé dans la présente invention est illustré de manière schématique en figure 1.

Une cible 10 est illuminée par un faisceau laser de contrôle 11 en une zone d'impact Zi.

Ce faisceau laser peut avantageusement être un laser de type Helium-Néon, stabilisé en fréquence, présentant une grande longueur de cohérence. Cette illumination génère un faisceau optique d'analyse réfléchi 12.

Deux séparateurs de faisceau, un miroir fixe suffisent pour monter l'interféromètre de type Mach-Zehnder. Le faisceau est d'abord séparé en deux bras via un premier séparateur 131, un premier bras est dirigé en direction d'un miroir fixe 132 et un second bras est dirigé vers la cible. Ils sont ensuite recombinés grâce à un deuxième séparateur de faisceaux 133, et envoyés sur la caméra, où ils interfèrent et génèrent un faisceau 11/12 produisant des franges d'interférences que le dispositif de l'invention propose d'analyser.

Le mouvement de la cible entraîne un déplacement du bras du laser se réfléchissant sur celle-ci par rapport au bras fixe, ce qui entraîne un mouvement des franges d'interférences. Il est souhaitable d'agrandir le diamètre du faisceau avant le premier séparateur afin de couvrir la surface de détection de la caméra. On peut utiliser un laser Hélium-Néon stabilisé en fréquence pour éviter la dérive de fréquence d'un laser Hélium-Néon classique et ainsi améliorer la résolution du dispositif.

Des moyens sont prévus pour agrandir le diamètre dudit faisceau avant le premier séparateur afin de couvrir la surface de détection de la caméra.

Les deux bras sont ensuite recombinés et imagés sur une caméra 16. Cette caméra collecte les franges d'interférences.

Les moyens de traitement d'image 17 en sortie de caméra fournissent les variations en angle et en position en temps réel de la surface en mouvement et permettent ainsi de corriger via des moyens 18 les mouvements de la surface.

En effet lorsque la surface est amenée dans un mouvement de rotation autour d'un axe sensiblement perpendiculaire à sa surface, les structures d'entraînement et les défauts d'alignement peuvent conduire à générer des écarts d'orientation et de position par rapport à une surface idéale fixe d'interaction. Ce sont ces écarts que permet de compenser le dispositif de l'invention, en les mesurant et en prévoyant une boucle d'asservissement pour les corriger en agissant sur ladite surface mobile.

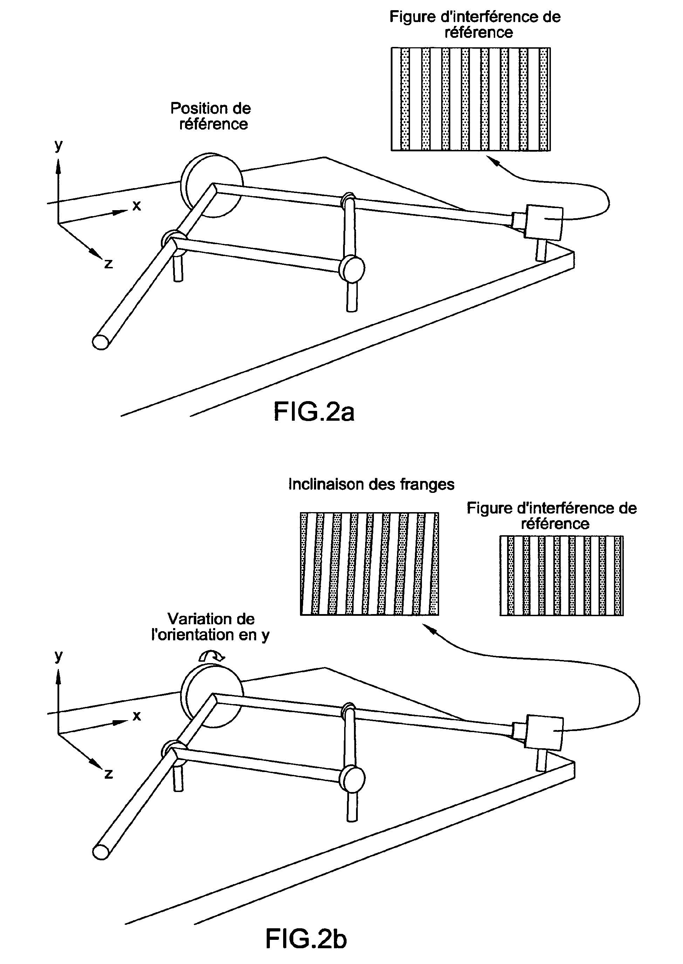

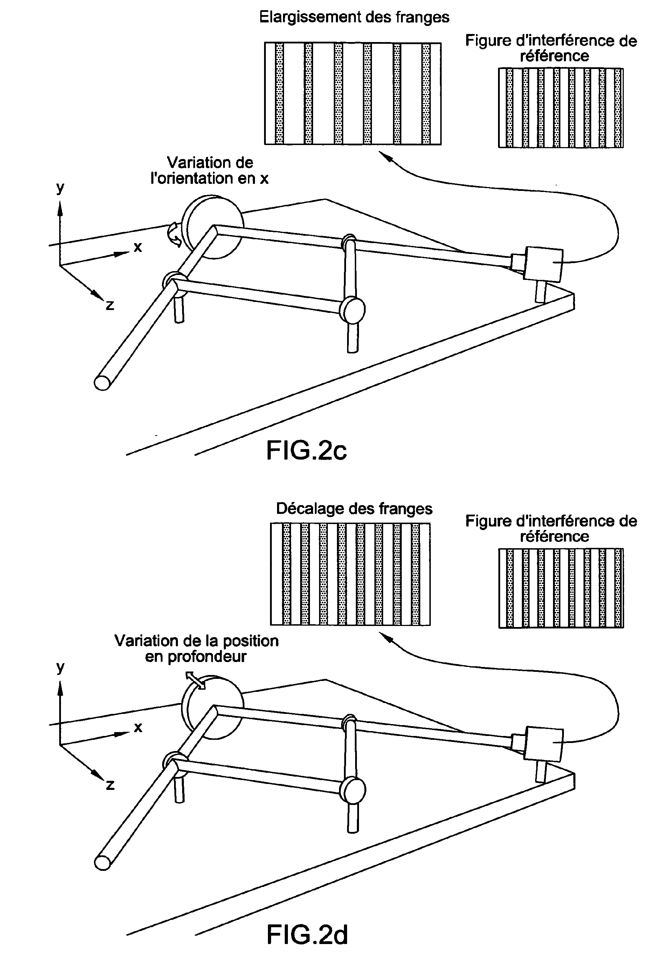

Les figures 2a, 2b, 2c et 2d sont relatives respectivement à une position standard de référence de la surface et définie dans un repère (X,Y,Z), à une rotation de ladite surface en y, à une rotation de ladite surface en x et à une variation en profondeur et montrent dans chacun des cas précités l'évolution des franges d'interférences détectées sur la caméra comme il sera explicité ci-après dans la suite de la description.

A l'aide de moteurs de précision montés sur la surface en mouvement, une boucle de rétroaction permet de compenser en temps réel les variation d'angle et de position de la surface, et d'offrir à tout instant une surface en mouvement présentant toujours la même position et la même orientation. Ces moteurs sont avantageusement de très petits moteurs de type pico-moteurs.

### Exemple de Dispositif de contrôle de position utilisé dans un dispositif selon l'invention :

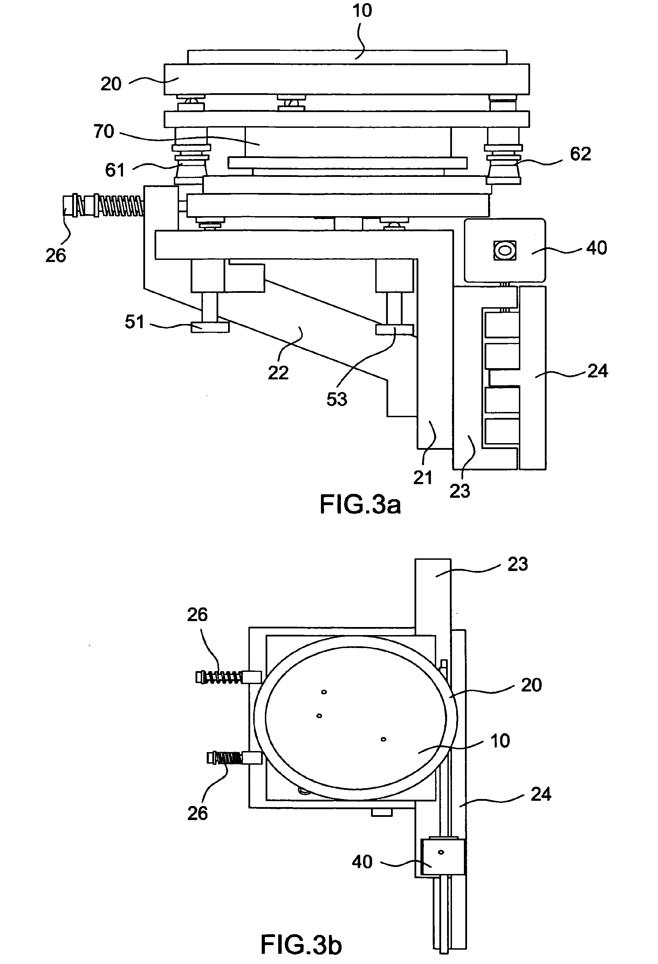

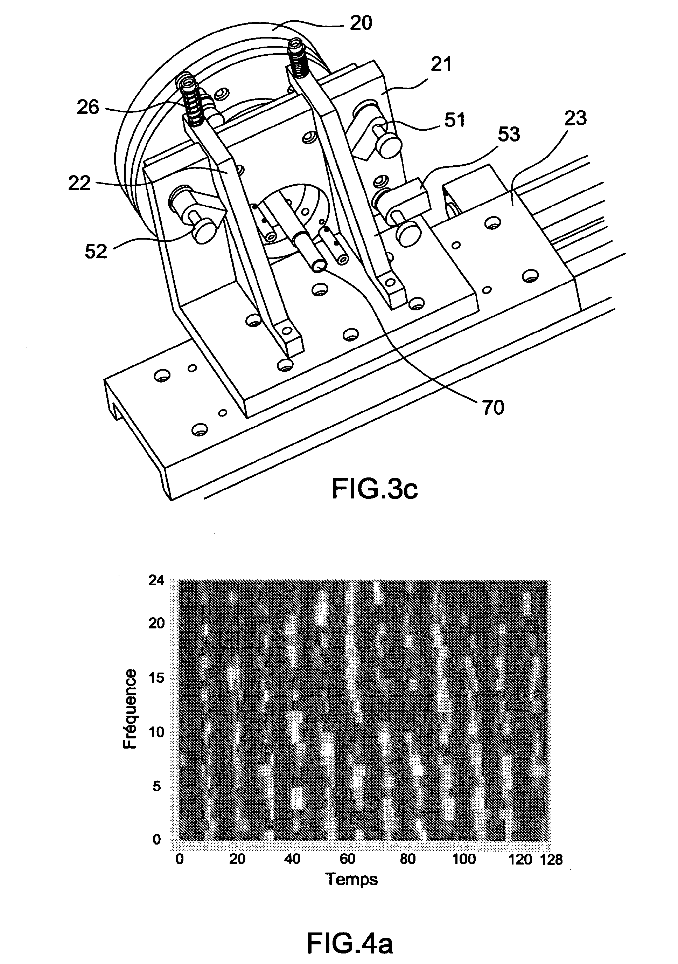

Les figures 3a, 3b et 3c illustrent à ce titre un exemple de porte-cible équipée du dispositif de contrôle de position.

La figure 3a illustre une vue en coupe d'une plate-cible sur laquelle est montée la surface appelée cible 10 destinée à être mise en rotation via des moyens 70. Des moyens de mise en translation sont également prévus, il peut s'agir d'un moteur de déplacement latéral 40.

Une structure dite porte-cible permet grâce à un ensemble de moyens dédiés de mettre la surface 10 en mouvement et positionnée sur un support 20.

Le porte-cible est soumis à un mouvement de rotation (dont l'axe est perpendiculaire à la surface de la cible) et de translation (parallèlement à la surface de la cible). La rotation est motorisée par les moyens 70, et un roulement à bille permet la rotation de la cible. La translation est aussi motorisée par un moteur de déplacement latéral 40, grâce à un moteur pas à pas, dont le corps est fixé à la partie mobile de la platine de translation et la vis à la partie fixe.

De plus, cinq moteurs permettent de modifier la position en profondeur de la cible ainsi que son orientation. Les deux moteurs 61 et 62 positionnés derrière la cible permettent un pré-alignement de la cible par rapport à l'axe de rotation, afin que la surface de la cible soit la plus perpendiculaire possible à l'axe de rotation. L'alimentation des deux moteurs est réalisée grâce à un contact tournant.

Les trois autres moteurs 51, 52 et 53 pouvant typiquement être des pico-moteurs permettent d'effectuer le pré-alignement de la platine de translation parallèlement à la surface de la cible, et sont ceux qui sont utilisés lors des alignements fins en profondeur et en orientation. Ils sont disposés en « trait-point-plan », pour faciliter les alignements. Une équerre 21 et une potence 22 sont utilisées pour compenser le poids de la cible et soulager les moteurs. Deux ressorts 26 permettent un réglage précis de la compensation du poids de la partie tournante du porte-cible.

La potence 22 comporte des éléments de fixation permettant de fixer un support intermédiaire destiné à supporter la cible. Elle est par ailleurs solidarisée à une plaque 23 actionnée par le moteur de déplacement latéral 40. L'ensemble peut être fixé de manière amovible sur le porte-cible.

La figure 3b montre la surface mobile de face et met en évidence le mouvement de translation pouvant être apporté par le moteur de déplacement latéral 40.

La figure 3c illustre une vue dite arrière de la plateforme équipée du dispositif et met en évidence l'ensemble des pico-moteurs 51, 52 et 53 disposés en « trait-point-plan », de manière à pouvoir corriger des défauts d'orientation de la surface mise en rotation par les moyens 70.

Les différents éléments motorisés sont commandés par un pilote de commandes qui transmet les informations issues de l'analyse temporelle effectuée par le logiciel à partir des images récoltées par la caméra 16 illustrée en figure 1.

Cette caméra 16 enregistre les franges d'interférences portées par le faisceau d'interférence 11/12.

La caméra capture les mouvements des franges d'interférences qui sont ensuite analysés par un programme informatique adapté à ce besoin et basé sur la transformation de Fourier.

Ce programme informatique permet de déterminer :
- la variation du pas du réseau de franges (nombre de franges sur la caméra ;
- le décalage du réseau de franges (position absolue du réseau de franges par rapport au bord de la caméra) ;
- et l'inclinaison des franges (angle des franges par rapport à l'axe y vertical de la caméra).

A partir de ces informations, les moyens de traitement logiciel de ces informations créent une image de la cible et détermine la position en profondeur de la cible, ainsi que l'orientation de la cible, c'est-à-dire les deux coordonnées verticales et horizontales du vecteur normal à la surface de la cible. Les moyens de traitement logiciel caractérisent donc complètement et en temps réel le mouvement de la cible.

La variation instantanée de la position en profondeur et de l'inclinaison de la cible est ensuite communiquée aux trois moteurs d'alignement fin, afin qu'ils compensent ces variations. Cette boucle de rétroaction permet donc de s'assurer que la surface présente toujours une position en profondeur et une orientation identique et contrôlée.

La figure 4a illustre un exemple de franges recueillies par la caméra. Cette analyse est menée en continu à raison d'une prise d'image et d'analyse correspondant à environ une dizaine par seconde. Chaque prise d'image conduit après traitement à restituer sur l'écran une image à proprement parler de la surface analysée. Selon une variante, il peut être envisagé d'introduire des variations colorimétriques qui indiquent l'orientation et la position en profondeur de ladite surface.

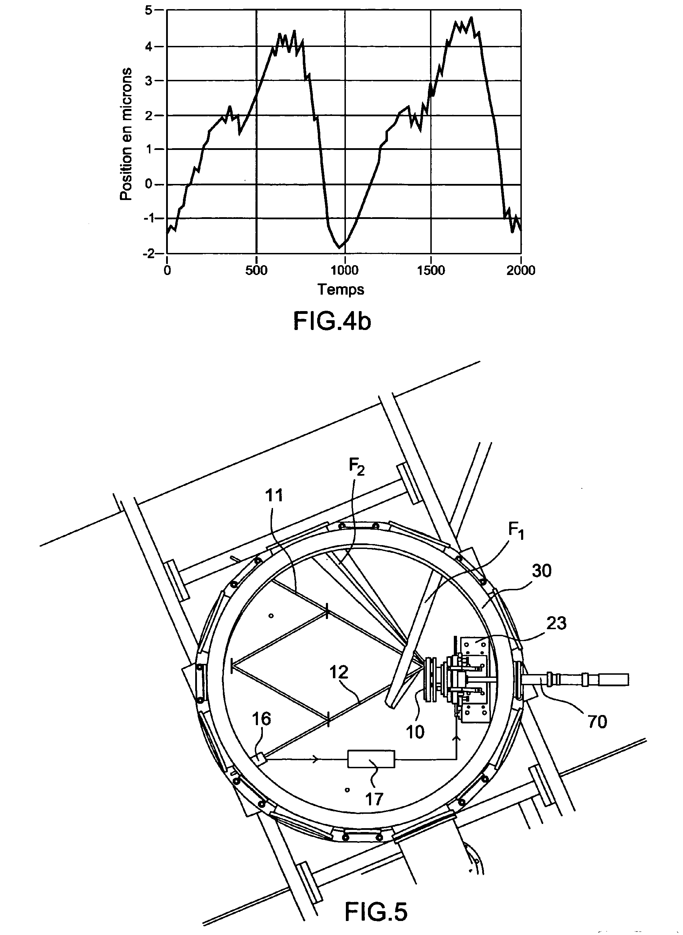

La figure 4b illustre les prises successives d'image de la surface mise en rotation et traduit en ordonnées la position en termes de profondeur exprimée en micromètres en fonction d'une abscisse temporelle. Typiquement lors d'une succession d'environ 2000 images on observe des écarts de position de l'ordre de quelques micromètres pour une surface mise en mouvement d'environ une quinzaine de centimètres de diamètre.

A partir de ces figures de franges d'interférences, et de l'évolution temporelle de déplacement des franges d'interférences, il est possible de déterminer les mouvements indésirables de la surface en mouvement et de corriger ces derniers grâce à l'emploi des moteurs décrits précédemment et commandés depuis les informations déduites de l'analyse temporelle des franges d'interférences.

Le dispositif optique de contrôle de l'orientation et de la position d'une surface en mouvement par mesure interférométrique précédemment décrit est particulièrement adapté à la génération d'un faisceau secondaire issu de l'irradiation d'une cible sous l'action d'un faisceau laser primaire.

En effet de nombreuses applications nécessitent, pour utiliser une source optique dite secondaire générée à partir d'une source primaire, de maintenir avec une très grande précision la surface d'interaction au niveau du point focal de la source primaire et de maitriser son orientation, c'est-à-dire de contrôler avec précision le point source de l'émission secondaire.

Or lors de l'utilisation d'une cible irradiée par une source primaire pour générer une source secondaire, il est indispensable de régénérer ladite cible et donc d'en prévoir le déplacement de manière à exposer en permanence une surface vierge. Il peut avantageusement être prévu des moyens de mise en rotation de ladite cible. Néanmoins ces moyens entraînent inévitablement des distorsions au niveau de ladite cible qu'il convient de corriger en temps réel d'où la nécessité de disposer d'un dispositif tel que celui de l'invention.

### Exemple de réalisation d'une source secondaire de type harmonique comportant le dispositif de contrôle de position par mesure interférométrique.

La source secondaire visée est une source impulsionnelle de très courte durée F₂ destinée à pouvoir analyser des phénomènes physiques extrêmement rapides.

Un faisceau incident impulsionnel de type femtoseconde F₁ à une première longueur d'onde λ₁ par exemple issu d'une source optique primaire, est envoyé sur une cible 10 animé d'un mouvement de rotation.

Typiquement la cible peut être un disque de verre dont l'interaction avec le faisceau primaire génère l'émission d'un faisceau de type harmonique (c'est-à-dire à des longueurs d'onde supérieures à celle du faisceau primaire incident) que l'on peut comprimer pour obtenir un faisceau d'une durée de l'ordre de quelques dizaines ou centaines d'attosecondes. Le faisceau ainsi généré correspond au faisceau F₂ représenté en figure 5.

La cible est par ailleurs montée sur un porte-cible telle que celle représentée sur les figures 3a à 3c.

La zone d'impact du faisceau laser continu de contrôle 11 destiné au dispositif de contrôle se situe dans une région de la cible proche mais différente de celle de la zone d'impact du faisceau primaire F₁, pour ne pas dégrader l'image du faisceau d'analyse.

L'ensemble des composants utilisés sont intégrés dans une enceinte sous vide 30 destinée à l'observation de phénomènes physiques, cette enceinte circulaire peut typiquement présenter un diamètre de l'ordre du mètre, on peut ainsi déceler des écarts de position de l'ordre de la dizaine de nanomètres avec une cible présentant un diamètre de l'ordre d'une dizaine de centimètres. Ces écarts de position et d'orientation sont traités via les moyens 17 intégrés dans la boucle de rétroaction et issus des informations recueillies au niveau de la caméra 16 intégrée à l'enceinte.

## Revendications

1. Dispositif de génération de source secondaire issue d'une source optique primaire (F1) émettant un premier faisceau optique à une première longueur d'onde (λ₁) focalisée sur une surface en mouvement (10), avec laquelle ledit premier faisceau interagit de manière à générer un faisceau secondaire (F2) comportant :
- un dispositif optique de contrôle de la position de ladite surface en mouvement générant un faisceau de contrôle de manière à déterminer l'orientation et la position du point d'émission de ladite source secondaire sur ladite surface, ledit dispositif optique de contrôle de la position d'une surface en mouvement (10) comprenant :
• un faisceau laser de contrôle (11), réfléchi par ladite surface en mouvement ;
• des moyens (16) de type caméra pour imager des informations de position de ladite surface ;
• des moyens (18) pour générer une boucle de rétroaction de contrôle de l'orientation et de la position de ladite surface en mouvement à partir de l'analyse dudit signal porteur d'informations,
**caractérisé en ce que** :
- ledit faisceau de contrôle est séparé en deux bras, dont l'un est un faisceau référence, fixe, et l'autre est un faisceau d'analyse (12) réfléchi par la surface en mouvement et mobile;
et **en ce que** ledit dispositif comprend :
- des moyens pour faire interférer lesdits faisceaux référence et d'analyse de manière à générer des franges d'interférences ;
- des moyens d'analyse (17) desdites images d'interférences;
- des moyens (18) pour générer une boucle de rétroaction permettant le contrôle de l'orientation et de la position de ladite surface en mouvement.

2. Dispositif de génération de source secondaire issue d'une source optique primaire selon la revendication 1 **caractérisé en ce que** les moyens d'analyse (17) desdites images d'interférences comportent des moyens d'analyse temporelle des paramètres suivants :
- la variation du pas du réseau de franges correspondant au nombre de franges d'interférences imagées sur la caméra ;
- le décalage du réseau de franges en terme de position du réseau de franges d'interférences par rapport au bord de la caméra ;
- l'inclinaison des franges d'interférences correspondant à l'angle des franges par rapport à l'axe vertical de la caméra défini dans un plan sensiblement parallèle à celui de la surface en mouvement.

3. Dispositif de génération de source secondaire issue d'une source optique primaire selon l'une des revendications 1 ou 2, **caractérisé en ce que** les moyens pour générer une boucle de rétroaction (17) comprennent un ensemble d'actuateurs motorisés (51, 52, 53) couplés à ladite surface en mouvement (10) et disposés en « trait-point-plan », dans un plan sensiblement parallèle à celui de la surface en mouvement pour régler l'orientation et la position de ladite surface.

4. Dispositif de génération de source secondaire issue d'une source optique primaire selon l'une des revendications 1 à 3, **caractérisé en ce qu'**il comporte un laser Hélium-Néon générant le faisceau laser de contrôle stabilisé en fréquence.

5. Dispositif de génération de source secondaire issue d'une source optique primaire selon l'une des revendications 1 à 4, **caractérisé en ce que** la surface en mouvement est un disque de verre ou de métal ou de plastique.

6. Dispositif de génération de source secondaire issue d'une source optique primaire selon l'une des revendications 1 à 5, **caractérisé en ce que** les moyens pour faire interférer lesdits faisceaux de référence et d'analyse de manière à générer un faisceau d'interférences comportent deux séparateurs de faisceaux (131,133) et un miroir de renvoi (132).

7. Dispositif de génération de source secondaire issue d'une source optique primaire selon l'une des revendications 1 à 6, **caractérisé en ce qu'**il comporte en outre des moyens pour élargir le diamètre dudit faisceau laser placés en amont de la séparation du faisceau d'analyse, de manière à couvrir la surface de détection de la caméra.

8. Dispositif de génération de source secondaire issue d'une source optique primaire selon l'une des revendications 1 à 7, **caractérisé en ce que** les moyens d'analyse comportent des moyens de traitement d'image pour extraire les informations de variation de position et d'orientation de ladite surface par rapport à un plan de référence.

9. Dispositif de génération de source secondaire issue d'une source optique primaire selon l'une des revendications 1 à 8, **caractérisé en ce que** le faisceau de la source secondaire est de type X-UV, électrons, protons.

10. Dispositif de génération de source secondaire issue d'une source optique primaire selon l'une des revendications 1 à 9, **caractérisé en ce que** la surface en mouvement est montée sur un porte-cible, ledit porte-cible étant équipé de moyens de mise en rotation de ladite surface (51,52,53) et de moyens de translation (40) de ladite surface.

11. Dispositif de génération de source secondaire issue d'une source optique primaire selon la revendication 10, **caractérisé en ce que** le porte-cible et la surface en mouvement sont montés dans une enceinte à vide.

12. Dispositif de génération de source secondaire issue d'une source optique primaire selon l'une des revendications 1 à 11, **caractérisé en ce que** le faisceau laser de contrôle est généré par une source laser continue ayant une longueur d'onde inférieure ou égale à la longueur d'onde de la source optique primaire pour assurer une grande précision de mesure.

13. Dispositif de génération de source secondaire issue d'une source optique primaire selon l'une des revendications 1 à 12, **caractérisé en ce que** la source optique primaire est une source laser impulsionnelle femtoseconde.

14. Dispositif de génération de source secondaire issue d'une source optique primaire selon la revendication 13, **caractérisé en ce que** la source secondaire est un faisceau laser harmonique de la source primaire d'une durée de quelques dizaines à quelques centaines d'attosecondes.

## Patentansprüche

1. Vorrichtung zum Erzeugen einer sekundären Quelle, die von einer primärem optischen Quelle (F1) kommt, die einen ersten Lichtstrahl mit einer ersten Wellenlänge (λ1) sendet, der auf einer sich bewegenden Fläche (10) fokussiert ist, mit der der erste Strahl so interagiert, dass ein sekundärer Strahl (F2) entsteht, die Folgendes umfasst:
- eine optische Vorrichtung zum Steuern der Position der sich bewegenden Fläche zum Erzeugen eines Steuerstrahls, um Orientierung und Position des Sendepunkts der sekundären Quelle auf der Oberfläche zu bestimmen, wobei die optische Vorrichtung zum Steuern der Position einer sich bewegenden Fläche (10) Folgendes umfasst:
• einen Steuerlaserstrahl (11), der von der sich bewegenden Fläche reflektiert wird;
• Mittel (16) des Kameratyps zum Abbilden von Informationen über die Position der Fläche;
• Mittel (18) zum Erzeugen einer Rückkopplungsschleife zum Steuern von Orientierung und Position der sich bewegenden Fläche auf der Basis der Analyse des informationsführenden Signals,
**dadurch gekennzeichnet, dass**:
- der Steuerstrahl in zwei Arme unterteilt ist, von denen einer ein fester Referenzstrahl und der andere ein von der sich bewegenden und mobilen Fläche reflektierter Analysestrahl (12) ist;
und dadurch, dass die Vorrichtung Folgendes umfasst:
- Mittel, um zu bewirken, dass der Referenz- und der Analysestrahl miteinander interferieren, um Interferenzstreifen zu erzeugen;
- Mittel (17) zum Analysieren der Interferenzbilder;
- Mittel (18) zum Erzeugen einer Rückkopplungsschleife zum Steuern von Orientierung und Position der sich bewegenden Fläche.

2. Vorrichtung zum Erzeugen einer von einer primären optischen Quelle kommenden sekundären Quelle nach Anspruch 1, **dadurch gekennzeichnet, dass** die Mittel (17) zum Analysieren der Interferenzbilder Mittel zum zeitlichen Analysieren der folgenden Parameter beinhalten:
- Variieren der Teilung des Streifennetzes entsprechend der Anzahl von auf der Kamera abgebildeten Interferenzstreifen;
- Verschieben des Streifennetzes im Hinblick auf die Position des Referenzstreifennetzes relativ zum Rand der Kamera;
- Neigen der Interferenzstreifen entsprechend dem Winkel der Streifen relativ zur vertikalen Achse der Kamera, die in einer Ebene im Wesentlichen parallel zu der der sich bewegenden Fläche definiert ist.

3. Vorrichtung zum Erzeugen einer von einer primären optischen Quelle kommenden sekundären Quelle nach Anspruch 1 oder 2, **dadurch gekennzeichnet, dass** die Mittel (18) zum Erzeugen einer Rückkopplungsschleife einen Satz von motorisierten Stellgliedern (51, 52, 53) umfasst, die mit der sich bewegenden Fläche (10) gekoppelt und gemäß einem "Linie-Punkt-Ebene"-System in einer Ebene im Wesentlichen parallel zu der sich bewegenden Fläche angeordnet sind, um Orientierung und Position der Fläche zu steuern.

4. Vorrichtung zum Erzeugen einer von einer primären optischen Quelle kommenden sekundären Quelle nach einem der Ansprüche 1 bis 3, **dadurch gekennzeichnet, dass** sie einen Helium-Neon-Laser umfasst, der den frequenzstabilisierten Steuerlaserstrahl erzeugt.

5. Vorrichtung zum Erzeugen einer von einer primären optischen Quelle kommenden sekundären Quelle nach einem der Ansprüche 1 bis 4, **dadurch gekennzeichnet, dass** die sich bewegende Fläche eine Glas-, Metall- oder Plastikscheibe ist.

6. Vorrichtung zum Erzeugen einer von einer primären optischen Quelle kommenden sekundären Quelle nach einem der Ansprüche 1 bis 5, **dadurch gekennzeichnet, dass** die Mittel, um zu bewirken, dass die Referenz- und Analysestrahlen zum Erzeugen eines Interferenzstrahls miteinander interferieren, zwei Strahlenteiler (131, 133) und einen Rückführungsspiegel (132) umfassen.

7. Vorrichtung zum Erzeugen einer von einer primären optischen Quelle kommenden sekundären Quelle nach einem der Ansprüche 1 bis 6, **dadurch gekennzeichnet, dass** sie ferner oberhalb des Trennpunkts des Analysestrahls platzierte Mittel zum Vergrößern des Durchmessers des Laserstrahls umfasst, um die Erkennungsfläche der Kamera zu bedecken.

8. Vorrichtung zum Erzeugen einer von einer primären optischen Quelle kommenden sekundären Quelle nach einem der Ansprüche 1 bis 7, **dadurch gekennzeichnet, dass** die Analysemittel Bildverarbeitungsmittel zum Extrahieren der Informationen in Bezug auf Variationen von Position und Orientierung der Fläche relativ zu einer Referenzebene umfassen.

9. Vorrichtung zum Erzeugen einer von einer primären optischen Quelle kommenden sekundären Quelle nach einem der Ansprüche 1 bis 8, **dadurch gekennzeichnet, dass** der Strahl der sekundären Quelle vom Typ X-UV, Elektronen, Protonen ist.

10. Vorrichtung zum Erzeugen einer von einer primären optischen Quelle kommenden sekundären Quelle nach einem der Ansprüche 1 bis 9, **dadurch gekennzeichnet, dass** die sich bewegende Fläche an einem Zielhalter montiert ist, wobei der Zielhalter mit Mitteln zum Drehen der Fläche (51, 52, 53) und mit Mitteln (40) zum translatorischen Bewegen der Fläche versehen ist.

11. Vorrichtung zum Erzeugen einer von einer primären optischen Quelle kommenden sekundären Quelle nach Anspruch 10, **dadurch gekennzeichnet, dass** der Zielhalter und die sich bewegende Fläche in einem Vakuumgehäuse montiert sind.

12. Vorrichtung zum Erzeugen einer von einer primären optischen Quelle kommenden sekundären Quelle nach einem der Ansprüche 1 bis 11, **dadurch gekennzeichnet, dass** der Steuerlaserstrahl von einer Direktlaserquelle erzeugt wird, deren Wellenlänge gleich oder kleiner als die Wellenlänge der primären optischen Quelle ist, um eine hohe Messgenauigkeit zu erzielen.

13. Vorrichtung zum Erzeugen einer von einer primären optischen Quelle kommenden sekundären Quelle nach einem der Ansprüche 1 bis 12, **dadurch gekennzeichnet, dass** die primäre optische Quelle eine Femtosekunden-Impulslaserquelle ist.

14. Vorrichtung zum Erzeugen einer von einer primären optischen Quelle kommenden sekundären Quelle nach Anspruch 13, **dadurch gekennzeichnet, dass** die sekundäre Quelle ein harmonischer Laserstrahl der primären Quelle mit einer Dauer von einigen Dutzend Attosekunden bis einigen Hundert Attosekunden ist.

## Claims

1. A device for generating a secondary source coming from a primary optical source (F1) transmitting a first optical beam at a first wavelength (λ1) focused on a moving surface (10), with which said first beam interacts so as to generate a secondary beam (F2), comprising:
- an optical device for controlling the position of said moving surface generating a control beam so as to determine the orientation and the position of the transmission point of said secondary source on said surface, said optical device for controlling the position of a moving surface (10) comprising:
• a control laser beam (11) reflected by said moving surface;
• means (16) of the camera type for imaging the position information of said surface;
• means (18) for generating a feedback loop for controlling the orientation and the position of said moving surface on the basis of the analysis of said information carrying signal,
**characterised in that**:
- said control beam is separated into two arms, one of which is a fixed reference beam and the other is an analysis beam (12) reflected by the moving and mobile surface;
and **in that** said device comprises:
- means for making said reference and analysis beams interfere with each other so as to generate interference fringes;
- means (17) for analysing said images of interference;
- means (18) for generating a feedback loop for controlling the orientation and the position of said moving surface.

2. The device for generating a secondary source coming from a primary optical source according to claim 1, **characterised in that** said means (17) for analysing said images of interference comprise means for the temporal analysis of the following parameters:
- the variation of the pitch of the array of fringes corresponding to the number of interference fringes imaged on the camera;
- the shift of the array of fringes in terms of the position of the array of interference fringes relative to the edge of the camera;
- the incline of the interference fringes corresponding to the angle of the fringes relative to the vertical axis of the camera defined in a plane substantially parallel to that of the moving surface.

3. The device for generating a secondary source coming from a primary optical source according to claim 1 or 2, **characterised in that** said means (18) for generating a feedback loop comprise a set of motorised actuators (51, 52, 53) coupled to said moving surface (10) and disposed according to a "point-line-plane" system in a plane substantially parallel to that of the moving surface so as to control the orientation and the position of said surface.

4. The device for generating a secondary source coming from a primary optical source according to any one of claims 1 to 3, **characterised in that** it comprises a helium-neon laser generating the frequency stabilised control laser beam.

5. The device for generating a secondary source coming from a primary optical source according to any one of claims 1 to 4, **characterised in that** said moving surface is a glass, metal or plastic disk.

6. The device for generating a secondary source coming from a primary optical source according to any one of claims 1 to 5, **characterised in that** said means for causing said reference and analysis beams to interfere with each other so as to generate an interference beam comprise two beam splitters (131, 133) and a return mirror (132).

7. The device for generating a secondary source coming from a primary optical source according to any one of claims 1 to 6, **characterised in that** it further comprises means for enlarging the diameter of said laser beam placed upstream of the splitting of the analysis beam so as to cover the detection surface of the camera.

8. The device for generating a secondary source coming from a primary optical source according to any one of claims 1 to 7, **characterised in that** said analysis means comprise image processing means for extracting the information relating to variation in the position and orientation of said surface relative to a reference plane.

9. The device for generating a secondary source coming from a primary optical source according to any one of claims 1 to 8, **characterised in that** the beam of the secondary source is of the X-UV, electrons, protons type.

10. The device for generating a secondary source coming from a primary optical source according to any one of claims 1 to 9, **characterised in that** said moving surface is mounted on a target holder, said target holder being provided with means for rotating said surface (51, 52, 53) and means (40) for causing a translational movement of said surface.

11. The device for generating a secondary source coming from a primary optical source according to claim 10, **characterised in that** said target holder and said moving surface are mounted in a vacuum enclosure.

12. The device for generating a secondary source coming from a primary optical source according to any one of claims 1 to 11, **characterised in that** said control laser beam is generated by a direct laser source, the wavelength of which is less than or equal to the wavelength of the primary optical source so as to provide high measurement accuracy.

13. The device for generating a secondary source coming from a primary optical source according to any one of claims 1 to 12, **characterised in that** said primary optical source is a femtosecond pulsed laser source.

14. The device for generating a secondary source coming from a primary optical source according to claim 13, **characterised in that** said secondary source is a harmonic laser beam of the primary source with a duration of a few tens of attoseconds to a few hundreds of attoseconds.
